# EUROPEAN PATENT APPLICATION

(11) **EP 2 522 559 A1**
(43) Date of publication of application: **14.11.2012**
(21) Application number: 10841953.2
(22) Date of filing: 29.11.2010
(51) Int. Cl.: B61D 13/00, B61D 17/16, B61D 17/04, B61C 3/00, B60M 1/13, B60M 1/20, B60M 1/234, B60M 7/00, B60L 5/00, B60T 1/14, B62D 31/02

(54) **LIGHT TRANSPORT VEHICLE**

(30) Priority: 08.03.2010 CN 201010122550; 08.01.2010 CN 201010004512
(71) Applicant: Song, Youzhou, Zhuhai, Guangdong 519000 (CN)
(72) Inventor: Song, Youzhou, Zhuhai, Guangdong 519000 (CN)
(74) Representative: Hengelhaupt, Jürgen
(86) International application number: PCT/CN2010/079230
(87) International publication number: WO 2011/082610

(57) **Abstract**

A lightweight transport vehicle includes a carriage, a connecting floor and a walking part. The connecting floor locates at a bottom of the carriage. The walking part connects both sides of a bottom of the connecting floor for supporting and conveying the connecting floor and the carriage. The distance between the connecting floor and the ground is at least larger than the height of the car. The width of the walking part between both sides of the bottom of the connecting floor is at least larger than a width of a car. The distance between the walking part and a side of the car is enough for the car to travel through. The carriage comprises at least one head and at least one body. The body includes a left half head part and a right half head part. There are connecting mechanisms responsible for connecting between the head and the body of each carriage and between the bodies.

## Description

### BACKGROUND OF THE INVENTION

### 1. Field of the Invention

The present invention relates to lightweight-trail transportation field.

### 2. Description of Related Art

As the rapid growth of the population in cities, the urban traffic system is getting complicate. The lightweight track car such as track electric car and subway has been widely used as a fast, punctual, energy-saving and safe transport tool.

Applicant has filed a CN Utility Patent application on June 26, 2009, No. 200920059314.3, titled "Wide Elevated-Track Electric Car", a CN Invention Patent application on January 8, 2010, titled "Wide Elevated Electric Car with Getting-on/off Means and Fast Escaping Device", and a CN Invention Patent application on September 27, 2010, titled "Lightweight Track Car Emergency Braking System" and "Lightweight Track Car Guiding System".

However, those above applications are not relevant to the transporting and disassembling of the lightweight track car. In addition, it is all about wide elevated-track electric car having huge volume so the transportation of the whole vehicle cannot be realized. That will be an obstacle to apply the whole vehicle to different area and cities.

Therefore, there is a need of a novel lightweight transport vehicle which overcomes the above disadvantages.

### SUMMARY OF THE INVENTION

The object of the present invention is to provide a lightweight detachable transport vehicle which allows other cars to run there under.

In order to achieve the above and other objectives, a lightweight transport vehicle includes a carriage, a connecting floor and a walking part. The connecting floor locates at a bottom of the carriage. The walking part connects both sides of a bottom of the connecting floor for supporting and conveying the connecting floor and the carriage. The distance between the connecting floor and the ground is at least larger than the height of the car. The width of the walking part between both sides of the bottom of the connecting floor is at least larger than a width of a car. The distance between the walking part and a side of the car is enough for the car to travel through. The carriage comprises at least one head and at least one body. The body includes a left half head part and a right half head part which together complete the head. The connecting floor is divided into pieces respectively corresponding to the head and the body. There are connecting mechanisms responsible for connecting between the head and the body of each carriage and between the bodies.

The amount of the head is two, respectively at a front and a rear of the body. The walking part includes a head walking part and a body walking part, respectively corresponding to the bottom of the connecting floor of the head and to the bottom of the connecting floor of the body, and between the walking part and the body. There is supporting connection between the walking part and the head; and each connecting floor comprises a left half floor part and a right half floor part which together complete the connecting floor.

A top of the body has exits for passengers to get on and off; stairs are formed between the exits and the connecting floor. The exits respectively have a lid thereon. A getting-on/off means including an air bridge above the roads is further included. The air bridge is away from the ground at a height reaching the exits of the car. The air bridge has entrances corresponding to the exits, and further has stairs or escaladers reaching to the ground so that the passengers can enter a carriage of the car via the top thereof from the air bridge.

Each side of the carriage consists of side plates. The side plates of at least one side of the carriage has a plurality movable plates which are movably connected to the body so that the movable plates can be opened relative to the body and thereby becomes emergency exits.

A guiding system for the car and a direction changing mechanism at the head are further included. The walking part includes a guiding wheel located at a bottom thereof. The direction guiding system includes a guiding shaft one end of which is connected to the direction changing mechanism, two guiding wheels connecting each other through a wheel shaft in the walking part, and a guiding groove on the road. The guiding wheel, the guiding shaft and the wheel shaft locate at a bottom of the direction changing mechanism. The other end of the guiding shaft is connected to a middle of the wheel shaft; the guiding groove is embedded in the road with an opening being on the surface of the road. The guiding shaft extends into the guiding groove through the opening; and the guiding wheel is able to rotate inside the guiding groove.

An emergency braking system is further included. The emergency braking system includes an emergency braking wheel, an emergency braking arm, a liquid pressure system and an emergency braking control system. The center of the emergency braking wheel has a wheel shaft. One end of the emergency braking arm is connected to the body through a rotating shaft. The other end of the emergency braking arm is connected to the wheel shaft. The liquid pressure system is a dynamic mechanism for the emergency braking system and includes a pressure liquid cylinder and a liquid pressure pump. One end of the liquid pressure cylinder is connected to the body, while the other end is connected between a middle of the emergency braking arm and a connecting point of the wheel shaft through the liquid pressure cylinder. By means of the emergency braking arm driving the emergency braking wheel to move downward to a surface of a track, friction on the track generates accordingly to offer emergency braking effect.

A magnetic wireless relay type electrically conducting system is further included. The electrically conducting system has a plurality of electrically conducting devices mounted at intervals, and electrically conducting rods or bars on the top of the car; and when the car is driving or parking on the road, the electrically conducting rods or bars come to in contact with the electrically conducting devices to form an electrical circuit. The electrically conducting devices respectively include a supporting column, a supporting arm and an electrically conducting roller. The supporting column is mounted beside the road; the supporting arm is connected to the supporting column. The electrically conducting roller is connected to the supporting arm through a movable connecting device. The electrically conducting roller is connected to a power supply through a wire. The distance away from the ground to the electrically conducting roller is equal to the height of the electrically conducting rods or bars on the top of the car. The electrically conducting roller is attracted by magnetic force to be in contact with the electrically conducting rods or bars, forming an electric circuit.

The movable connecting device includes a stretchable spring; one end of the stretchable spring is fixedly connected to the supporting arm, while the other end is connected to the electrically conducting roller. The electrically conducting roller is freely hung on the supporting arm via the stretchable spring in a manner of movable attachment.

In other aspect of the invention, a lightweight transport vehicle including a carriage, a connecting floor and a walking part is provided. The connecting floor locates at a bottom of the carriage. The walking part connects both sides of a bottom of the connecting floor for supporting and conveying the connecting floor and the carriage. A car pathway for a car to drive is formed along the lengthwise direction of the carriage under the carriage. The carriage is of an assembled structure having a plurality of units to complete the whole head or body by using a connecting mechanism between the units.

The carriage comprises at least one head and at least one body which can be assembled to complete the whole head. The body includes a left half body part and a right half body part which can be assembled to complete the whole body. The head comprises a left half head part and a right half head part which can be assembled together. The left half body part, the right half body part, the left half head part and the right half head part can be assembled together. There are supporting connection between the walking part and the body, and between the walking part and the head. Alternatively, the carriage comprises at least one head and at least one body; the body comprises at least two body sections as a front body part and a rear body part. The body sections and the head can be assembled together to complete the whole head. There are supporting connection between the walking part and the body, and between the walking part and the head.

The advantages of the invention are as follows. The lightweight transport vehicle of an assembled structure according to the invention has a plurality of units to complete the whole head or body by using a connecting mechanism between the units. As such, before the car is conveyed, a left half body part, a right half body part, a left half head part and a right half head part of small volume can be packed into an existing transport vehicle for the space concern. At the destination, the respective half parts are assembled to realize a complete car. The car can be easily conveyed to different area and cities, after it has be produced, overcoming the difficulty in transport.

In order to further the understanding regarding the present invention, the following embodiments are provided along with illustrations to facilitate the disclosure of the present invention.

### BRIEF DESCRIPTION OF THE DRAWINGS

Fig. 1 is a schematic view of a lightweight transport vehicle in detached way according to the invention.

Fig. 2 is a schematic top view of a lightweight transport vehicle in detached way according to the invention.

Fig. 3 is a schematic cross-sectional view of a lightweight transport vehicle in detached way according to the invention.

Fig. 4 is a schematic view of a lightweight transport vehicle in assembled way according to the invention.

Fig. 5 is a schematic top view of a lightweight transport vehicle in assembled way according to the invention.

Fig. 6 is a schematic cross-sectional view of a lightweight transport vehicle in assembled way according to the invention.

Fig. 7 is a schematic perspective view of a lightweight transport vehicle according to the invention.

Fig. 8 is a top view of Fig. 7.

Fig. 9 is a bottom view of Fig. 7.

Fig. 10 is a schematic top view of an elevated-track electric car according to the invention.

Fig. 11 is a top view of Fig. 10.

Fig. 12 is a left view of Fig. 10.

Fig. 13 is a schematic top view of an elevated-track electric car after an emergency exit is opened according to the invention.

Fig. 14 is a left view of Fig. 13.

Fig. 15 is a schematic view of an elevated-track electric car with an emergency exit standing on the ground by the support of a stretchable rod according to the invention.

Fig. 16 is a schematic perspective view of an elevated-track electric car with an emergency exit is opened according to the invention.

Fig. 17 is a schematic view of a whole structure of an elevated-track car according to the invention.

Fig. 18 is a schematic enlarged view of Part A of Fig. 17.

Fig. 19 is a schematic view of the whole structure of a lightweight track car according to the invention.

Fig. 20 is a schematic enlarged view of Part A in Fig. 19.

Fig. 21 is a schematic enlarged view of Part Z in Fig. 26.

Fig. 22 is a schematic enlarged view of Part V in Fig. 25.

Fig. 23 is a schematic enlarged view of Part Y in Fig. 27.

Fig. 24 is a schematic enlarged view of Part X in Fig. 28.

Fig. 25 is a schematic view of a lightweight transport vehicle according to other embodiment of the invention.

Fig. 26 is a schematic view of a lightweight transport vehicle taken at a different view angle from Fig. 25 according to other embodiment of the invention.

Fig. 27 is a schematic view of Fig. 25.

Fig. 28 is a schematic side view of Fig. 25.

### DETAILED DESCRIPTION OF THE PREFERRED EMBODIMENTS

The aforementioned illustrations and following detailed descriptions are exemplary for the purpose of further explaining the scope of the present invention. Other objectives and advantages related to the present invention will be illustrated in the subsequent descriptions and appended tables.

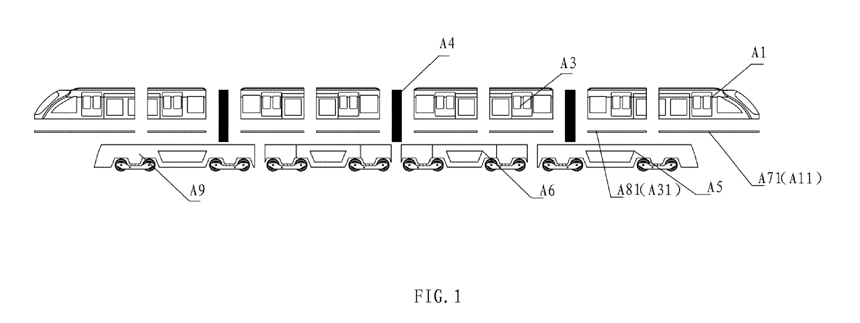

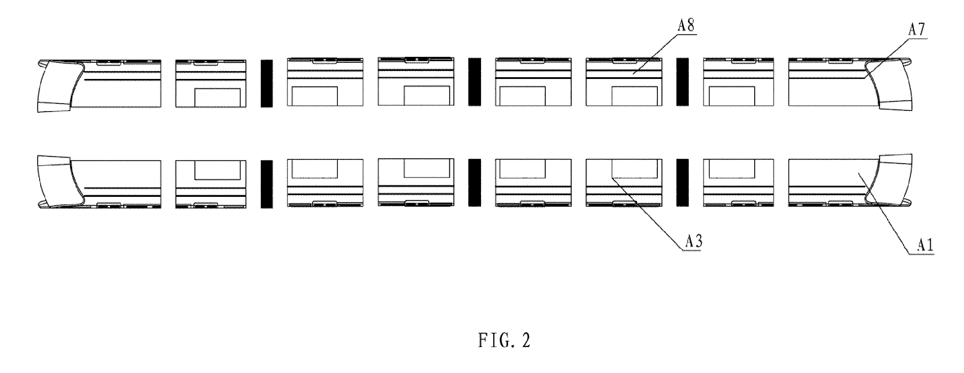

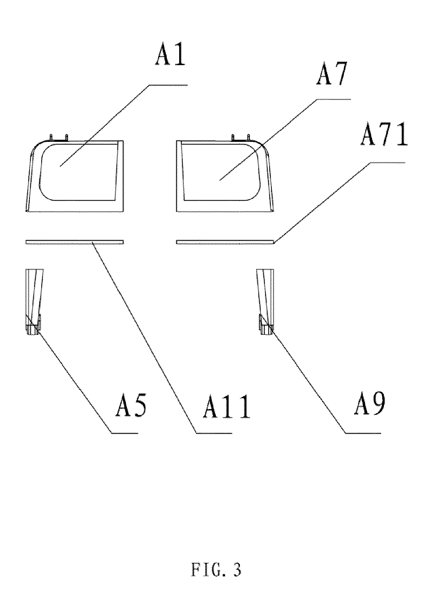

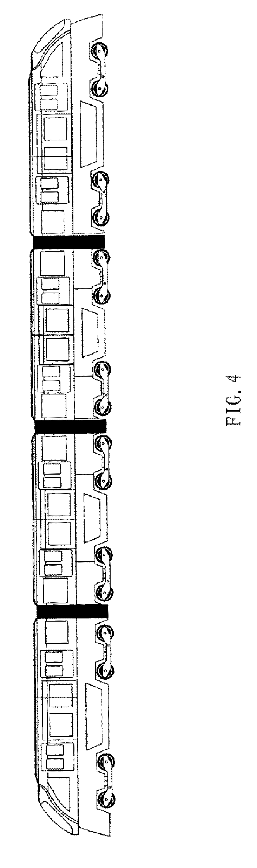

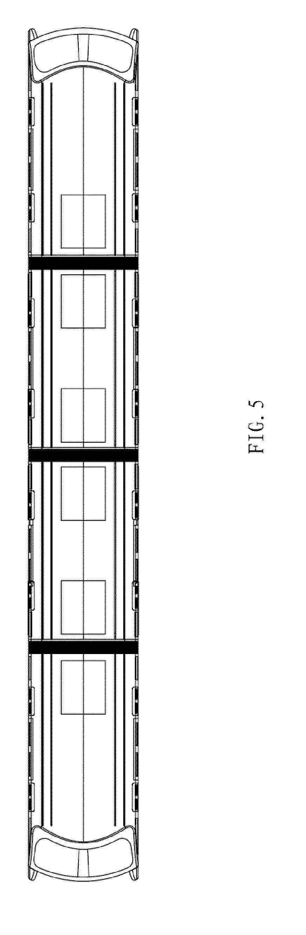

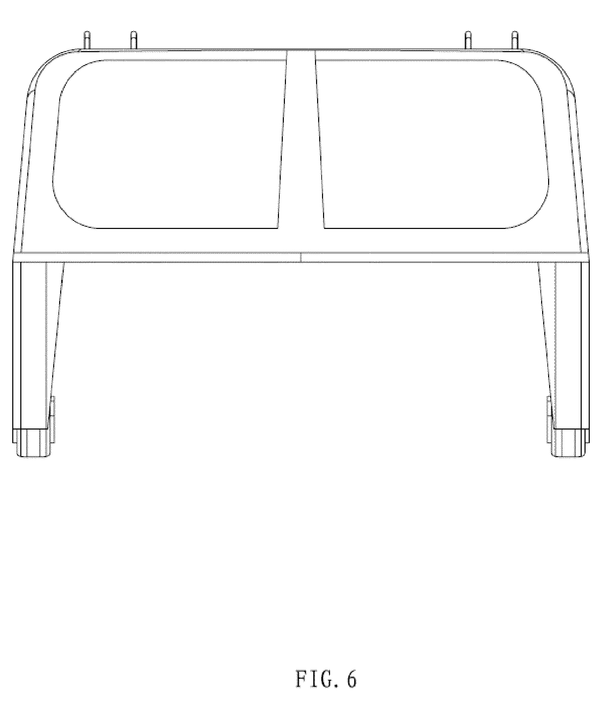

Referring to Fig. 1 through Fig. 6, a lightweight transport vehicle of the invention includes a carriage, a connecting floor and a walking part.

The connecting floor locates beneath the carriage. The walking part connects both sides of a bottom of the connecting floor for supporting and conveying the connecting floor and the carriage.

The distance between the connecting floor and the ground is at least larger than the height of the car. The width of the walking part between both sides of the bottom of the connecting floor is at least larger than a width of a car. The distance between the walking part and a side of the car is enough for the car to travel through.

The carriage includes at least one head and at least one body. The body includes a left half head part and a right half head part. The connecting floor is divided into pieces respectively corresponding to the head and the body.

There are connecting mechanisms responsible for connecting between the head and the body of each carriage and between the bodies.

From the above examples, CN Patent Application No. 200920059314.3, titled "wide elevated-track electric car, discloses a new car with a wide body which so far no technology of transporting and disassembling such a car has been proposed. The car with wide body itself is not possible for long-distance drive. In order to solve the problem that a bulky carriage is difficult to be conveyed as a whole, the applicant proposes a lightweight transport vehicle of an assembled structure having a plurality of units to complete the whole head or body by using a connecting mechanism between the units. As such, before the car is conveyed, a left half body part, a right half body part, a left half head part and a right half head part of small volume can be packed into an existing transport vehicle for the space concern. At the destination, the respective half parts are assembled to realize a complete car. The car can be easily conveyed to different area and cities, after it has be produced, overcoming the difficulty in transport.

The walking part can be a car wheel, and a metallic wheel exclusively for the tracks.

In one embodiment, the amount of the head can be two, respectively at a front and a rear of the body. The walking part includes a head walking part and a body walking part respectively corresponding to the bottom of the connecting floor of the head and to the bottom of the connecting floor of the body. Each connecting floor includes a left half floor part and a right half floor part. There are supports between the walking part and the body, and between the walking part and the head.

In case of emergency, there is an escape design.

A top of the body has exits for passengers to get on and off. Stairs are formed between the exits and the connecting floor. The exits respectively have a lid thereon.

A getting-on/off means includes an air bridge above the roads. The air bridge is away from the ground at a height reaching the exits of the car so that the passengers can enter a carriage of the car via the top thereof from the air bridge. For this purpose the air bridge has stairs or escaladers reaching to the ground.

Each side of the carriage consists of side plates. The side plates of at least one side of the carriage has a plurality movable plates which are movably connected to the body so that the movable plates can be opened relative to the body and thereby becomes emergency exits.

In the case that the walking part is the metallic wheel on the track, a guiding system and a direction changing mechanism can be further provided. The walking part includes a guiding wheel. The direction guiding system includes a guiding shaft one end of which is connected to the direction changing mechanism, two guiding wheels connecting each other through a wheel shaft in the walking part, and a guiding groove on the road. The guiding wheel, the guiding shaft and the wheel shaft locate at a bottom of the direction changing mechanism.

The other end of the guiding shaft is connected to a middle of the wheel shaft. The guiding groove is embedded in the road with an opening being on the surface of the road. The guiding shaft extends into the guiding groove through the opening. The guiding wheel is able to rotate inside the guiding groove.

In the case that the walking part is the metallic wheel on the track, an emergency braking system can be further included. The emergency braking system includes an emergency braking wheel, an emergency braking arm, a liquid pressure system and an emergency braking control system. The center of the emergency braking wheel has a wheel shaft. One end of the emergency braking arm is connected to the body through a rotating shaft. The other end of the emergency braking arm is connected to the wheel shaft. The liquid pressure system is a dynamic mechanism for the emergency braking system and includes a pressure liquid cylinder and a liquid pressure pump. One end of the liquid pressure cylinder is connected to the body, while the other end is connected between a middle of the emergency braking arm and a connecting point of the wheel shaft through the liquid pressure cylinder. By means of the emergency braking arm driving the emergency braking wheel to move downward to a surface of a track, friction on the track generates accordingly to offer emergency braking effect.

In the case that the car is a cable car, a magnetic wireless relay type electrically conducting system is further included. The electrically conducting system has a plurality of electrically conducting devices mounted at intervals, and electrically conducting rods or bars on the top of the car. When the car is driving or parking on the road, the electrically conducting rods or bars come to in contact with the electrically conducting devices to form an electrical circuit.

The electrically conducting devices respectively include a supporting column, a supporting arm and an electrically conducting roller. The supporting column is mounted beside the road. The supporting arm is connected to the supporting column. The electrically conducting roller is connected to the supporting arm through a movable connecting device.

The electrically conducting roller is connected to a power supply through a wire.

The distance away from the ground to the electrically conducting roller is equal to the height of the electrically conducting rods or bars on the top of the car. The electrically conducting roller is attracted by magnetic force to be in contact with the electrically conducting rods or bars, forming an electric circuit.

Furthermore, the movable connecting device includes a stretchable spring. One end of the stretchable spring is fixedly connected to the supporting arm, while the other end is connected to the electrically conducting roller. The electrically conducting roller is freely hung on the supporting arm via the stretchable spring in a manner of movable attachment.

According to another embodiment of the invention, a lightweight transport vehicle includes a carriage, a connecting floor and walking part. The connecting floor locates beneath the carriage. The walking part locates at both side of a bottom of the connecting floor to support and convey the connecting floor and the carriage.

Under the carriage, a car pathway for a car to drive is formed along the lengthwise direction of the carriage.

The carriage can be assembled and includes a plurality of assembling units to realize a complete car head or car body. The respective assembling units are connected to one another via a connecting mechanism.

The carriage can be the one of any form able to drive under the lightweight transport vehicle of the invention, such as standard car, sport utility vehicle, motorcycle and bicycle.

The above carriage has an assembled structure of any form, and includes without limitation to:

1) The carriage includes at least one head and at least one body. The body includes a left half body part and a right half body part which can be assembled together to complete the whole body. The head includes a left half head part and a right half head part which can be assembled together to complete the whole head. The left half body part, the right half body part, the left half head part and the right half head part can be assembled together. There are supporting connection between the walking part and the body, and between the walking part and the head.

2) The carriage includes at least one head and at least one body. The body includes at least two body sections as a front body part and a rear body part. The body sections and the head can be assembled together. There are supporting connection between the walking part and the body, and between the walking part and the head.

The assembling units of the invention is not limited to the above form, as long as they can be assembled together and are small enough for packing in the existing transport vehicle.

The walking part at both sides of the bottom of the carriage can be further formed with a car exit for the car under the carriage can be out through the side of the carriage, or an external car can enter under the carriage through the car exit.

Referring to Fig. 1 through Fig. 6, the lightweight transport vehicle can be a lightweight assembled track traffic express bus including two heads and a body between the heads.

The heads has the same structure having a left half head part A7 and a right half head part A1, a left half head bottom plate A71, a right half head bottom plate A11 and a plurality of head walking part A5 driving the heads to move. A bottom of the left half head part A7 has a cross section corresponding to the left half head bottom plate A71. A bottom of the right half head part A1 has a cross section corresponding to the right half head bottom plate A11. The left half head bottom plate A71 and the right half head bottom plate A11 are two examples of the above connecting floor.

The left half head part A7 is symmetrical to the right half head part All, which can match each other to assembly as a whole head carriage. Correspondingly, the left half head bottom plate A71 and the right half head bottom plate A11 are connected as a whole head bottom plate at a lower part of the head carriage. The walking part A5 is mounted under the head plate. Thereby a complete head is achieved.

The body includes a plurality of left half body parts A8, a plurality of first side body bottom plates A81, a plurality of right half body parts A3, a plurality of second side body bottom plates A31, a plurality of body connecting mechanisms A4 and a plurality of body walking parts A9 driving the body to move. The first side body bottom plates A81 has a size corresponding to a bottom of left half body parts A8. The first side body bottom plates A81 and the second side body bottom plates A31 are two examples of the connecting floor.

The head waking part A5 and the body walking part A9 are two examples of the walking part.

The left half body parts A8 are respectively symmetrical to the right half body parts A3. The left half body parts A8 can match with the right half body parts A3 to complete a whole body carriage through the body connecting mechanisms A4. The first side body bottom plates A81 and the second side body bottom plates A31 match one another as whole body bottom plates to be mounted under the lower of the body carriage. The body walking parts A9 can be mounted under the body bottom plates. Thereby a complete body can be achieved.

The head is connected to the body through a body connecting mechanism A4.

During transportation, the head and the body can be respectively designed in sections which can be then assembled together as a complete lightweight track express bus.

For better performance and functions, a wide elevated-track electric car, a getting-on/off means and fast-escaping means are further mounted.

In this embodiment, the lightweight transport vehicle of the invention includes at least one wide elevated-track electric car driven by power, a getting-on/off means and a fast escaping means. Chassis of carriages are wide and high enough for a standard car to pass by. The carriages have a plurality of emergency exits for the passengers to enter into the carriages from top of the carriages through a sky air bridge.

The electric car includes a body, wheels, a power system, a driving system and a brake system. The body includes a carriage and a chassis. The carriage is mounted on the chassis. A plurality of wheels is mounted at both bottom sides of the carriage. The wheels are connected to the body through frame. The distance between the chassis and the ground is larger than the height of the standard car. Distance between the frames at both sides of the body or distance between wheels is larger than the width of the standard car so that the standard car can pass under the chassis.

The top of the body has exits for the passengers to enter. Stairs are formed between the exits and the connecting floor. The exits have lids.

The getting-on/off means includes a sky air bridge above the road. The distance between the sky air bridge and the grounds is equal to the height of the car. The sky air bridge has entrances matching with the exits on the top of the body. Each terminal of the sky air bridge has stairs or an escalader connecting to the ground so that the passengers can enter the carriage through the exits on the top of the body through the sky air bridge.

Preferably, a plurality of doors is mounted at sides of the carriage. The lids of the exits of the body include pivoting lids and movable lids.

The getting-on/off means includes platforms at both sides of the road. The height of the platform is equal to the height of the bottoms of the doors.

Alternatively, the distance from the ground to the plane of the platform is equal to the height of the car.

The plane of the platform is connected to the ground through the stairs or the escalader.

Preferably, both sides of the carriage consist of side plates. The side plates of one or both sides of the carriage have a plurality of movable plates. The movable plates are movably connected to the body so that the movable plates are opened relative to the body, thereby forming fast-escaping means.

Preferably, the lower ends of the movable plates are connected to the body through hinges. There may be movable connection between upper ends of the movable plates in a manner of pulling the plates from the interior of the body or detaching the plates. Slant ropes are mounted between the movable plates and the upper end of the body, so that slant surfaces can be formed after the movable plates are opened.

Alternatively stretchable supporting rods are mounted at both sides of the movable plates. After the movable plates are opened, the stretchable supporting rods stretch out to stand on the ground, so that the movable plates form slant surfaces relative the ground.

Preferably, a plurality of handrails on interior sides of the movable plates and on the carriage corresponding to the movable plates.

Preferably, the body includes a plurality of carriages connecting in series, and movable connecting means between neighboring carriages.

The carriages at front end and the rear end respectively have independent power system and driving system.

Preferably, the power system includes a motor and a power supply.

The power includes an external power supply, a battery or a supper capacitor. A power interface or charging interface is mounted on an exterior of the body.

Preferably, an air condition system is mounted inside the carriage. An air conditioning input interface is mounted on the exterior of the body.

Preferably, a front and a rear of the body, and a bottom of the chassis of the body respectively have a radar detection device.

An air condition system is mounted inside the carriage B11. An air conditioning input interface is mounted on the exterior of the body. The sky air bridge and the platform have a solar energy board, a power supply system, a charging device, and a cool air input device or a warm air input device.

Sound/light warming device or display is mounted on the body. A LCD display or LED display is mounted on the front, the rear or the side of the body.

Preferably, the sky air bridge or the platform has a solar energy board, a power supply system and a charging device.

The sky air bridge or the platform further has a cool air input device or a warm air input device.

The effect of the invention: the top of the body further has exits, and a sky air bridge is mounted above the road to increase the passage for the passengers to across the road so that the passengers can conveniently get on and off.

A plurality of exits is mounted on the side of the body. When in emergency, the passengers need not to break the windows to pass through, but instead slide out of the carriage along the movable plates. A great number of passengers can fast escape in short time. The handrails help avoid the passengers to crush or stair over one another, especially for elders, children and pregnant women to escape the carriage. Safety in use for the vehicle can be further increased.

The wide elevated-track electric car has huge capacity. It allows 2 to 3 standard cars ruing under the body, which reduces the impact to the traffic on the road while increases traffic capacity. It can drive along with other standard cars on the road. Compared to trains, the invention needs low investment and operation costs. Compared to other transport vehicles, this invention generates low voice and no waste gas is emitted. The huge body can be advantageous advertisement carrier and also a part of scene in the city. The invention can effectively reduce traffic accident and guarantee the passengers' safety.

The invention is an economic and practical option as a public transport vehicle, improving the problem about traffic jam in cities.

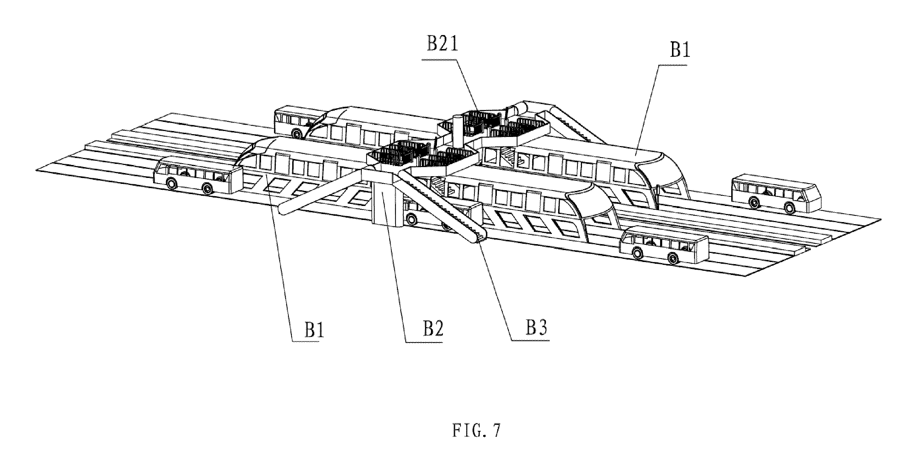

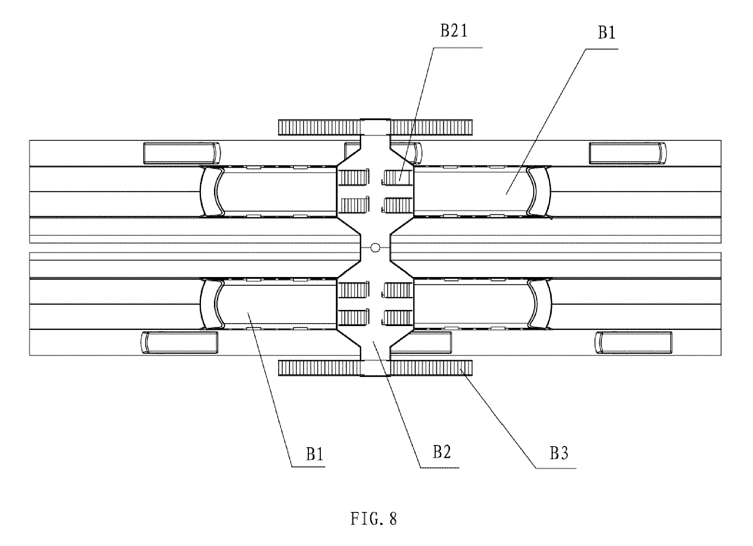

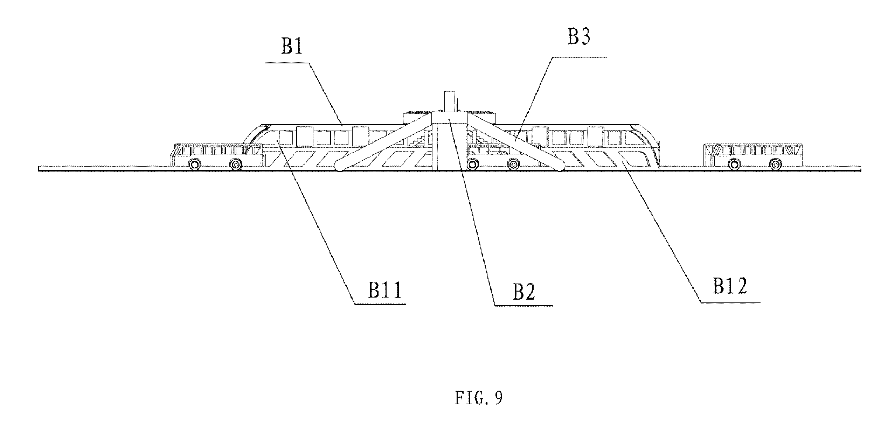

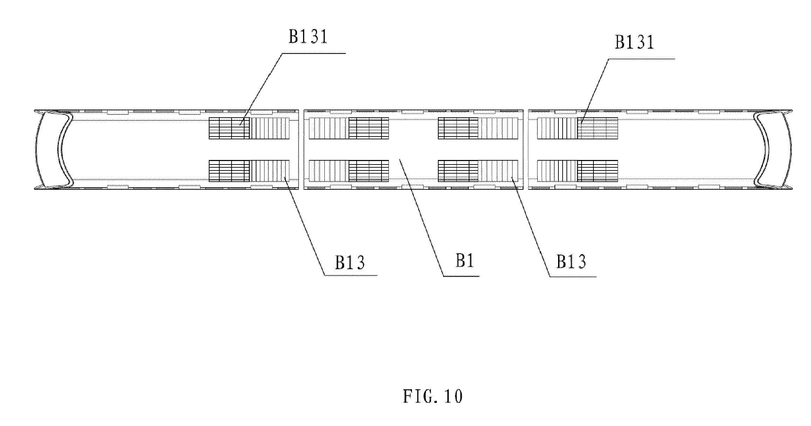

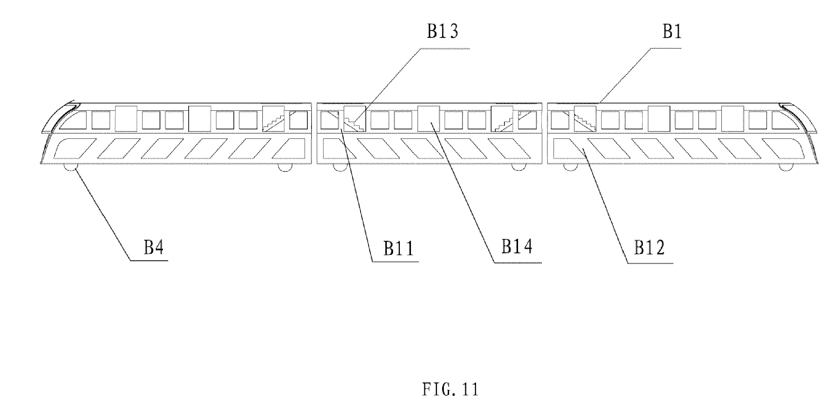

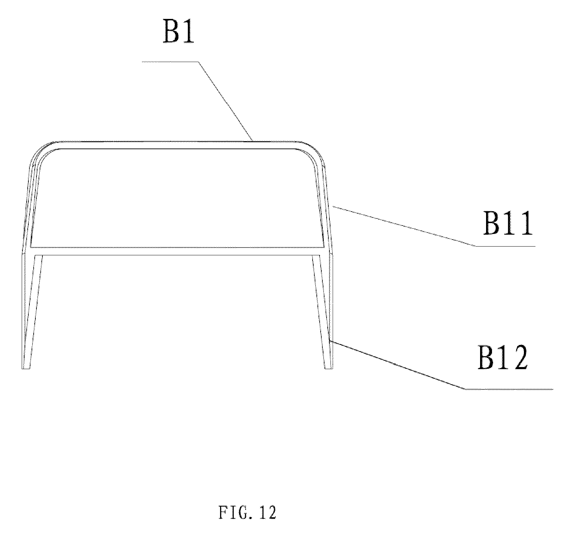

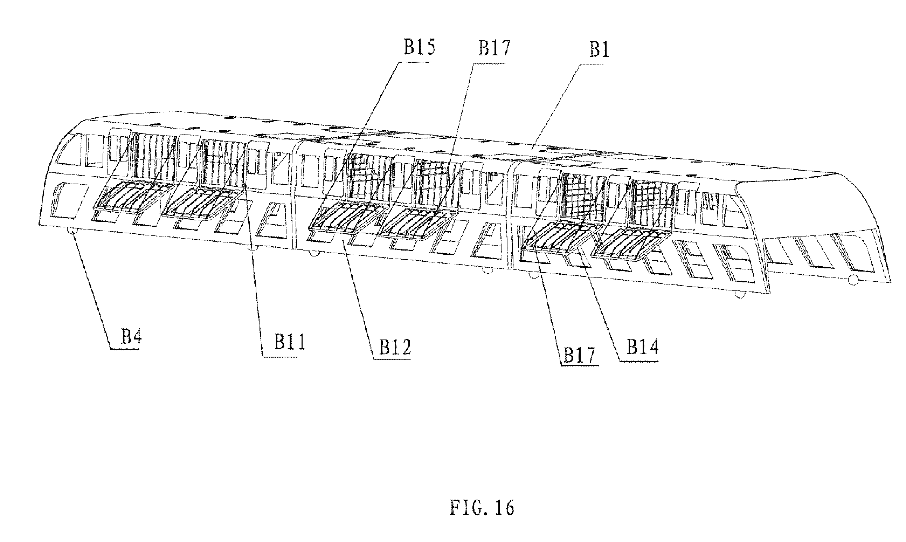

As shown in Fig. 7 through Fig. 16, the transport vehicle of the invention includes a wide elevated-track electric car, a getting-on/off device and a fast-escaping device. The electric car includes a body B1, wheels B4, a power system, a driving system and a brake system. The body B1 includes a carriage B11 and a chassis. The carriage B11 is mounted on the chassis. A plurality of wheels B4 is mounted at both bottom sides of the chassis. The wheels B4 are connected to the body B1 through frames B12. The distance between the chassis and the ground is larger than the height of the standard car. Distance between the frames B12 at both sides of the body B1 or distance between the wheels B4 is larger than the width of the standard car so that the standard car can pass under the chassis. The top of the body B1 has exits B 13 for the passengers to enter. Stairs are formed between the exits B 13 and the connecting floor of the carriage B11. The exits have lids B 131. The getting-on/off means includes a sky air bridge B2 above the road. The distance between the sky air bridge B2 and the ground is equal to the height of the body B1. The sky air bridge B2 has entrances B21 matching with the exits B 13 on the top of the body B1. Each terminal of the sky air bridge B2 has stairs or an escalader B3 connecting to the ground so that the passengers can enter the carriage B11 through the exits B 13 on the top of the body B1 from the sky air bridge B2.

In this embodiment, a plurality of doors is mounted on the side of the carriage B11. The lids B 131 of the exits B 13 can be pivoting lids or movable lids. The getting-on/off means includes platforms at both sides of the road. The height of the platform is equal to the height of the bottoms of the doors. The passengers can pass the platform beside the road and get in the carriage B11 from the doors at side of body B1. Alternatively, the distance from the ground to the plane of the platform is equal to the height of the body B1. The plane of the platform is connected to the ground through the stairs or the escalader so that the passengers can pass the platform beside the road and get in the carriage B11 through the exits B 13 on the top of the body B1.

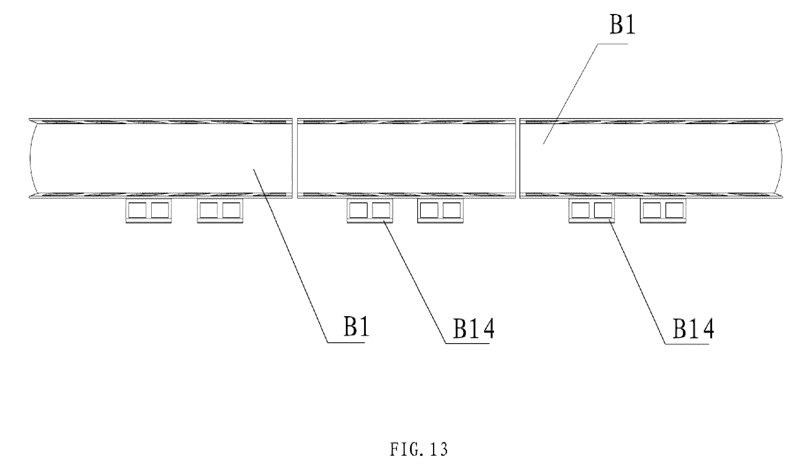

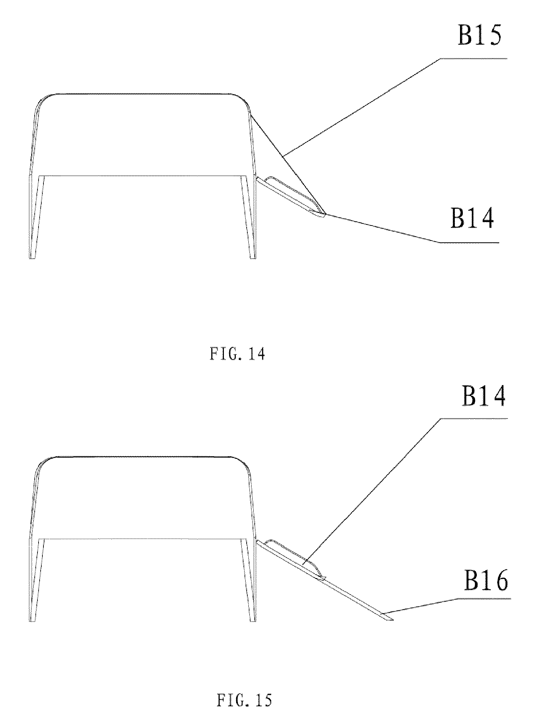

As shown in Fig. 13, Fig. 14, Fig. 15 and Fig. 16, both sides of the carriage B11 are constructed by side plates. The side plates at one side of the carriage B11 have a plurality of movable plates B14. The movable plates are movably connected to the body so that the movable plates are opened relative to the body, thereby forming fast-escaping means. The lower ends of the movable plates B14 are connected to the body B1 through hinges. Slant ropes B 15 are mounted between the movable plates B 14 and the body B1. As shown in Fig. 14, when in emergency, the movable plates B 14 are opened to form a slant surface relatively for the passengers to slide along the slant movable plates B 14 and escape safely. In another embodiment, as shown in Fig. 15, stretchable supporting rods B16 are mounted at both sides of the movable plates B 14. After the movable plates B 14 are opened, the stretchable supporting rods B16 stretch out to stand on the ground, so that the movable plates B 14 form slant surfaces relative the ground.

In this embodiment, a plurality of handrails B 17 is mounted on the interior of the movable plates B 14, and also mounted on the emergency exits corresponding to the carriage B11 and the movable plates B 14. The distance between lower rims of the emergency exits and the floor of the carriage B11 is advantageously low for elders, children and pregnant women to fast escape from the carriage. The security of the vehicle can be increased.

In this embodiment, the body includes a plurality of carriages B11 connecting in series, and movable connecting means between neighboring carriages B11. Additional carriages B11 can be added or some of the carriages B11 can be detached according to the capacity for concerns of transport efficiency and cost. The carriages at front end and the rear end respectively have independent power system and driving system. When the car breaks down, the spare dynamic system and driving system can be actuated to increase its reliability.

The power system includes a motor and a power supply. The power includes an external power supply, a battery or a supper capacitor. A power interface or charging interface is mounted on an exterior of the body. An air condition system is mounted inside the carriage B 11. An air conditioning input interface is mounted on the exterior of the body. The sky air bridge and the platform have a solar energy board, a power supply system, a charging device, and a cool air input device or a warm air input device to supply charging, cool air or warm air to the passengers when the car stops for the passengers to get on and off.

A front and a rear of the body B1, and a bottom of the chassis of the body respectively have a radar detection device. A sound/light warming device or display is mounted on the body B1. A LCD display or LED display is mounted on the front, the rear or the side of the body B1. When an excessively high car or barrier appears before the driver or behind the driving vehicle, or the standard car running under the chassis of the body B1 comes to be too close to the vehicle of the invention, the warming device immediately emits a warming voice or light. The LCD display or the LED display is used to display the traffic information or advertisement. The top of the carriage B11 can be transparent or semi-transparent to give cozy sense to the passengers.

In order to realize better performance and functions, a lightweight track express bus guiding system can be added to combine with the lightweight transport vehicle.

As rapid increase in growth of population in cities, the traffic system is getting complicate. The lightweight track electric has been widely used as an efficient and safe transport tool. The current light track electric car has a guiding system for safely driving along a curved path and is usually a turning frame mounted on a lower part of the body of the lightweight track electric car. The wheels are fixedly mounted on the turning frame. The turning frame is a device which turns the body to one designated direction while carries the whole weight of the body to guarantee the car to smoothly travel along the curved path. The turning frame consists of auxiliary equipment, a frame body, a single-spring hanging device, a dual-spring hanging device and a dragging bar. The turning frame has some disadvantages such as high cost, ruin to the road in construction and inconvenience in replacement.

In this embodiment, a lightweight track car guiding system is provided to overcome the insufficiency in the prior art. The guiding system includes a guiding shaft one end of which is connected to the direction changing mechanism, two guiding wheels connecting each other through a wheel shaft, and a guiding groove on the road. The guiding wheel, the guiding shaft and the wheel shaft locate at a bottom of the direction changing mechanism. The other end of the guiding shaft is connected to a middle of the wheel shaft. The guiding groove is embedded in the road with an opening being on the surface of the road. The guiding shaft extends into the guiding groove through the opening. The guiding wheel is able to rotate inside the guiding groove.

Preferably, the opening is slightly larger than the diameter of the guiding shaft for the action of the guiding shaft.

Preferably, the guiding wheel is a universal wheel.

Preferably, the diameter is rather smaller than the diameter of the car wheel.

Compared to the current technology, the lightweight track car guiding system of the invention can replace the current turning frame, and can be achieved with low cost, easy assembly and disassembly, and high applicability.

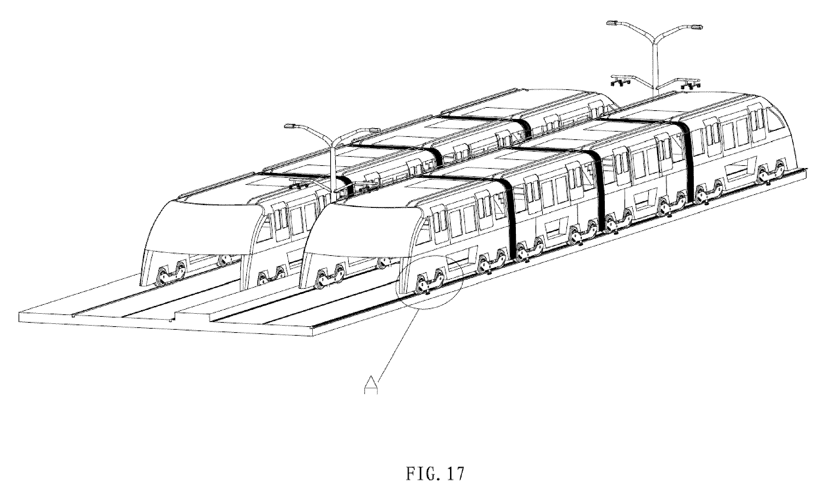

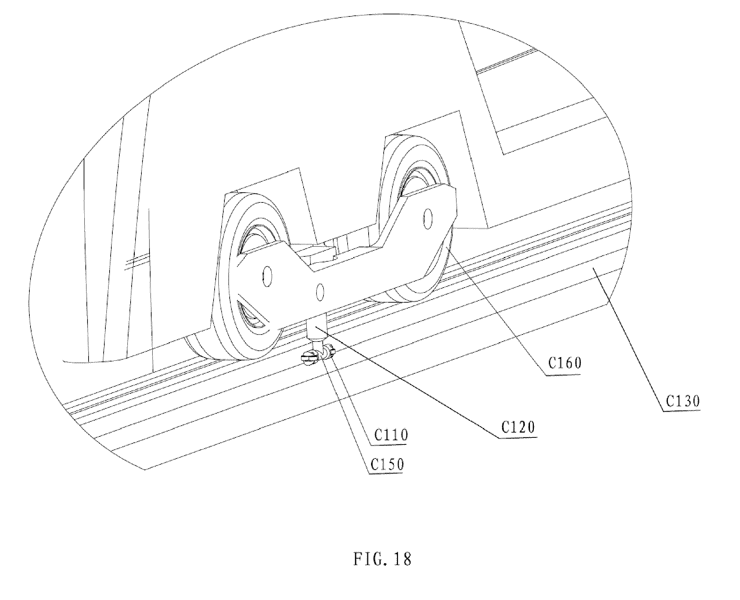

As shown in Fig. 17 and Fig. 18, the lightweight track car guiding system of this embodiment includes a guiding shaft C120 one end of which is connected to the direction changing mechanism (not shown), two guiding wheels C110 connecting each other through a wheel shaft C150, a guiding groove C130 on the road. The guiding wheel C110, the guiding shaft C120 and the wheel shaft C150 locate at a bottom of the direction changing mechanism. The other end of the guiding shaft C120 is connected to a middle of the wheel shaft C150. The guiding wheel C110 is a universal wheel of diameter is rather smaller than the diameter of the lightweight track car wheel C160. The guiding groove C130 is embedded in the road with an opening being on the surface of the road. The guiding shaft C120 extends into the guiding groove C 130 through the opening. The guiding wheel C110 is able to rotate inside the guiding groove C130. The width of the opening is slightly larger than size of the diameter of the guiding shaft C120 for the action of the guiding shaft C120.

When the car is running, the guiding wheel C110 passively rotates inside the guiding groove C130 in an extended direction of the guiding groove C130. Along with the guiding shaft C120 connected to the wheel shaft C150, the guiding wheel C110 further drives the direction changing mechanism of the car to drive the car to run in the moving direction of the guiding wheel C110, i.e., the extended direction of the guiding groove C130.

In order to achieve better performance and functions, a lightweight track car emergency braking system can be added to the lightweight track car.

As the rapid growth of the population in cities, the urban traffic system is getting complicate. The lightweight track car such as track electric car and subway has been widely used as a fast, punctual, energy-saving and safe transport tool. The increase in the number of stops and car speed and in complication of traffic conditions result in higher requirement to the operation of the lightweight track car. For example, it needs frequently to offer an emergency brake at unexpected accidents. However, the current lightweight track car emergency braking system uses the mounted-on-car braking system which has low emergency braking speed, long braking distance, poor safety and unreliable emergency braking effect. That intends to accelerate the wearing of the car, shortening the service life of the car.

To overcome the insufficiency of the above conventional lightweight track car emergency braking system, the lightweight track car emergency braking system which increases the emergency efficiency and security is provided.

The lightweight track car emergency braking system of the invention includes an emergency braking wheel, an emergency braking arm, a liquid pressure system and an emergency braking system. The center of the emergency braking wheel has a wheel shaft. One end of the emergency braking arm is connected to the body through a rotating shaft. Another end of the emergency braking arm is connected to the wheel shaft. The liquid pressure system is a dynamic mechanism of the emergency braking system, and includes a liquid pressure cylinder and a liquid pressure pump. One end of the liquid pressure cylinder is connected to the body, while the other end is connected between a middle of the emergency braking arm and a connecting point of the wheel shaft through the liquid pressure cylinder. By means of the emergency braking arm driving the emergency braking wheel to move downward to a surface of a track, friction on the track generates accordingly to offer emergency braking effect.

Preferably, the emergency braking wheel, the emergency braking arm and the liquid pressure system are mounted at the bottom of the body.

Preferably, the emergency braking wheel is a metallic wheel containing at least one frictional material.

Preferably, the emergency braking wheel is replaceable.

Preferably, the emergency braking system is mounted in the driving room.

Preferably, after successively braking, the emergency braking system controls the liquid pressure pump to stop, the emergency braking arm drives the emergency braking wheel to return to its original position, and the emergency braking wheel departs from the track and suspended under the body.

Compared to the current technology, the lightweight track car emergency braking system uses the liquid pressure pump to drive the liquid pressure cylinder. The emergency braking arm is thereby driven to move downward so that the emergency braking wheel is pressed down to come to be in contact with the track. Friction thereby generates to offer the braking effect. The stopping distance is shortened, increasing the safety of car driving and making the car of the invention more practical.

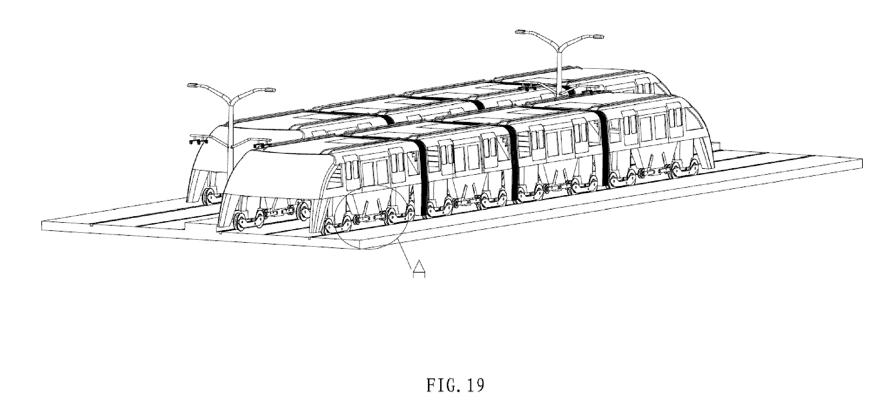

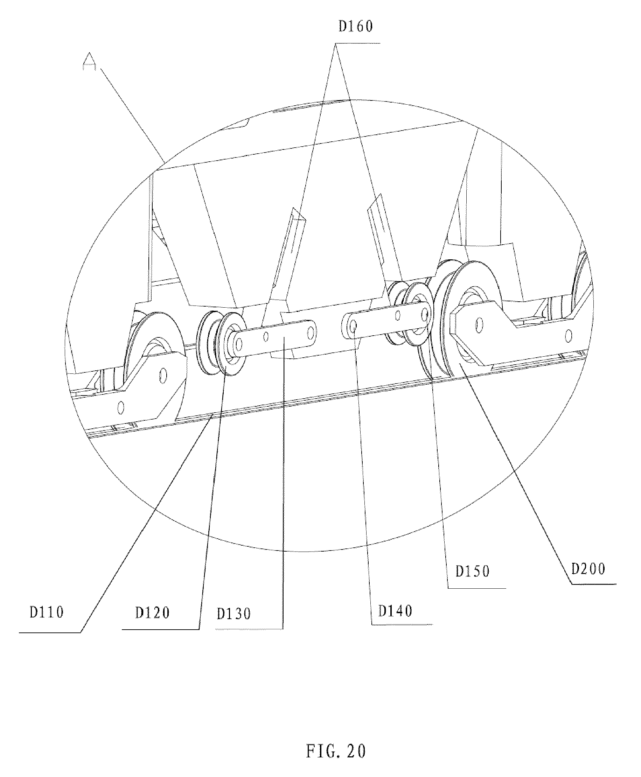

As shown in Fig. 19 and Fig. 20, the lightweight track car emergency braking system includes an emergency braking wheel D120, an emergency braking arm D130, a liquid pressure system and an emergency braking control system. The emergency braking wheel D120, the emergency braking arm D130 and the liquid pressure system are mounted at the bottom of the body. The emergency braking control system is mounted in the driving room so that it can be directly actuated to offer emergency brake when in emergency.

The center of the emergency braking wheel D120 has a wheel shaft D150. The wheel of the emergency braking wheel D120 includes a metallic wheel containing at least one frictional material. Larger frictional index is between the surface of the wheel and the track D110. One end of the emergency braking arm D 130 is connected to the body through one rotating shaft D 140. The other end of the emergency braking arm D130 is connected to the wheel shaft D150 and then to the emergency braking wheel D120. The liquid pressure system is a dynamic mechanism for the emergency braking system, and includes a liquid pressure cylinder D160 and a liquid pressure pump. One end of the liquid pressure cylinder D160 is connected to the body. The other end of the liquid pressure cylinder D160 is connected between the middle point of the emergency braking arm D130 and the terminal where the emergency braking arm D130 is connected to the wheel shaft D150, through the liquid pressure cylinder D170. The emergency braking control system controls the liquid pressure system to work or stop.

When the car runs normally, the emergency braking arm D130 is in parallel to or is almost in parallel to the bottom of the car. The emergency braking wheel D120 is suspended at the bottom of the car away from the track D110.

When the car is in emergency and needs an emergency brake, the emergency braking control system controls the liquid pressure pump to drive the liquid pressure cylinder D160 to move downward. The liquid pressure cylinder D160 drives the emergency braking arm D130 to connect to one end of the wheel shaft D150 so as to move downward using the other end of the emergency braking arm D130 connecting to the body as a shaft. Meanwhile, the emergency braking wheel D120 is driven downward until the emergency braking wheel D120 comes to be in contact with the track D110. The emergency braking wheel D120 continues moving downward to apply pressure against the track D110. Huge friction generates between the emergency braking wheel D120 and the track D110. After successively braking, the emergency braking control system controls the liquid pressure pump to stop. The emergency braking arm D130 drives the emergency braking wheel D120 to return to its original position. The emergency braking arm D130 is in parallel to or is almost in parallel to the bottom of the car. The emergency braking wheel D 120 departs from the track D110 and suspended under the body.

In the lightweight track car emergency braking system, the emergency braking wheel D 120 is replaceable.

In order achieve better performance and functions, a magnetic wireless relay type electrically conducting system can be added to the lightweight transport vehicle.

In this embodiment, the electrically conducting system can offer charging from the top of the car in relay when the car is running or stops.

The electrically conducting system has a plurality of electrically conducting devices mounted at intervals, and electrically conducting rods or bars on the top of the car. When the car is driving or parking on the road, the electrically conducting rods or bars come to in contact with the electrically conducting devices to form an electrical circuit.

The electrically conducting devices respectively include at least one supporting column, at least one supporting arm and at least one electrically conducting roller. The supporting column is mounted beside the road. The supporting arm is connected to the supporting column. The electrically conducting roller is connected to the supporting arm through a movable connecting device.

The electrically conducting roller is connected to a power supply through a wire.

The distance from the ground to the electrically conducting roller is equal to the height of the electrically conducting rods or bars on the top of the car. The electrically conducting roller is attracted by magnetic force to be in contact with the electrically conducting rods or bars, forming an electric circuit.

Preferably, the movable connecting device includes a stretchable spring. One end of the stretchable spring is fixedly connected to the supporting arm, while the other end is connected to the electrically conducting roller. The electrically conducting roller is freely hung on the supporting arm via the stretchable spring in a manner of movable attachment.

Preferably, a guiding plate is mounted between the electrically conducting roller and the movable connecting device. The electrically conducting roller is mounted at a terminal of the guiding plate and connected to the guiding plate through a rotating shaft.

Preferably, the guiding plate is of semi-spherical structure. One end of the semi-spherical guiding plate is connected to the supporting arm through the stretchable spring while the other end has an electrically conducting roller.

Preferably, the electrically conducting roller or the guiding plate has a magnet. The electrically conducting roller has a circular groove along its outer circumference.

Preferably, the supporting arm has two sets of electrically conducting rollers apart from each other and connected to the power supply through a wire.

Preferably, the supporting column has a solar battery board.

Preferably, the supporting column has a lamp for illuminating the road.

Preferably, the at least one supporting columns has a monitor.

Preferably, the distance between the neighboring supporting columns is smaller than the length of the car. During the car is running, the electrically conducting roller of the second supporting column has come to be in contact with the electrically conducting rod or bar on the top of the car and thus form the electric circuit before the electrically conducting roller of the first supporting column departs from the electrically conducting rod or bar on the top of the car.

The effect of the invention is as follows. Compared to the existing technology, the invention offers charging in relay to the car from the top of the car. The electrically conducting roller uses the guiding plate, the stretchable spring and the magnet to be in contact with the electrically conducting rod or bar on the top of the car. The guiding plate is movable connected to the supporting arm so as to allow the guiding plate to move up and down. The mechanic collision and wear caused by the connection of the electrically conducting rod or bar to the electrically conducting roller can be reduced.

In this invention, the electrically conducting rod or bar is used as a conductor to form electric circuit with the electrically conducting device above the road. During the car is running, the electric circuit formed by the electrically conducting rod or bar on the top of the car is reliable to supply the electric car with stable power. The invention can further use the existing lamp stands on the road as carriers which can be also used for car conveyance, public security monitoring and night illumination. It meets the need of illumination in the air for the wide elevated-track electric car or a motored car run on a fixed track while solves the problem of providing cable for the illumination in the air, excessive wiring, large pressure loss and inferior urban visual impact. Other advantages of this invention include low cost, easy assembly and convenience in maintenance.

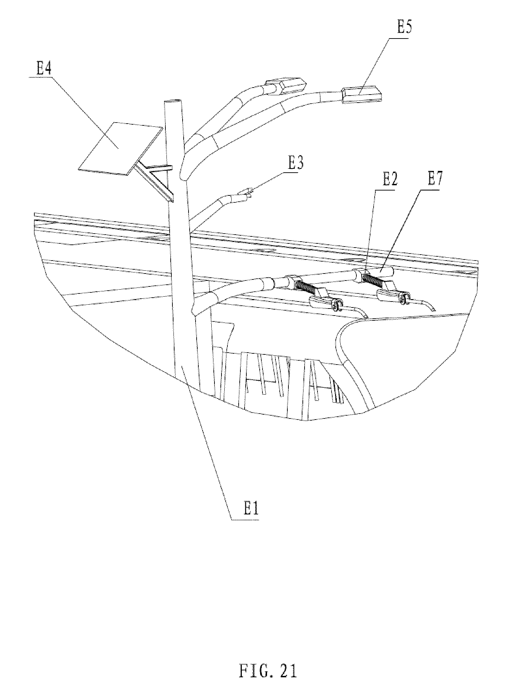

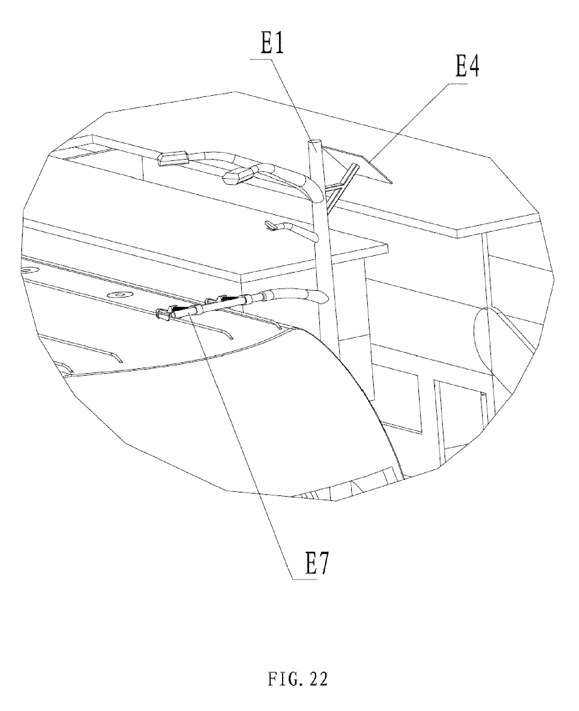

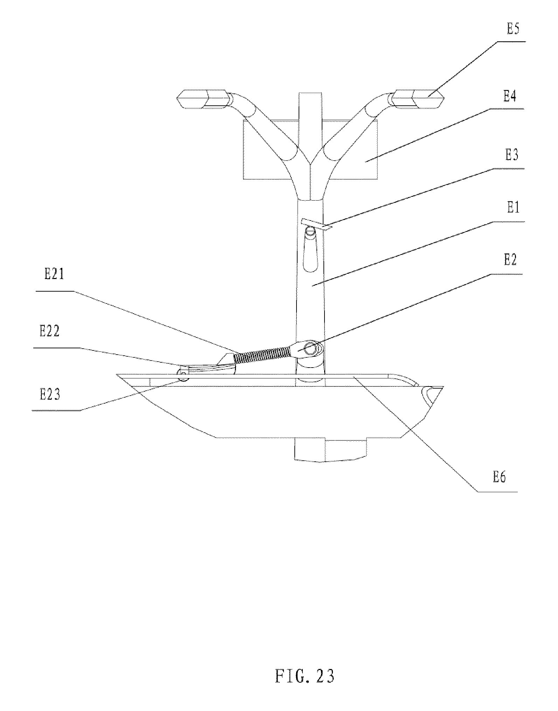

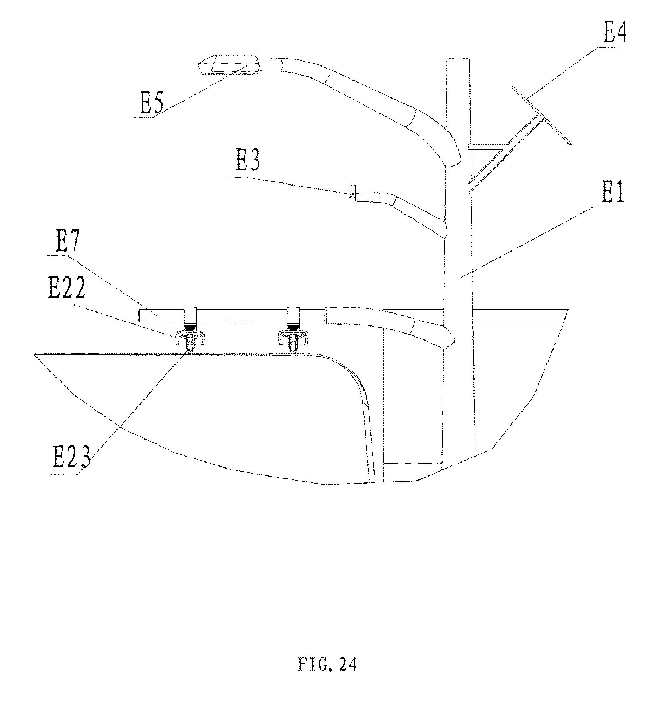

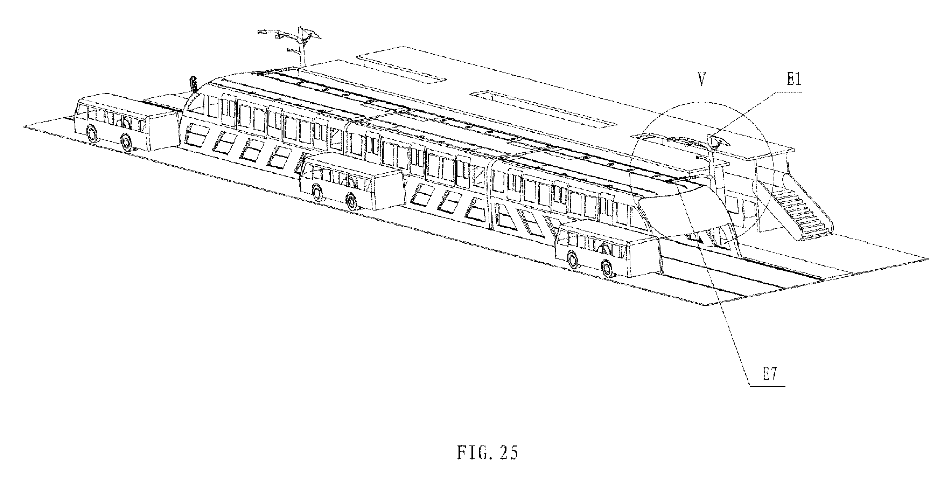

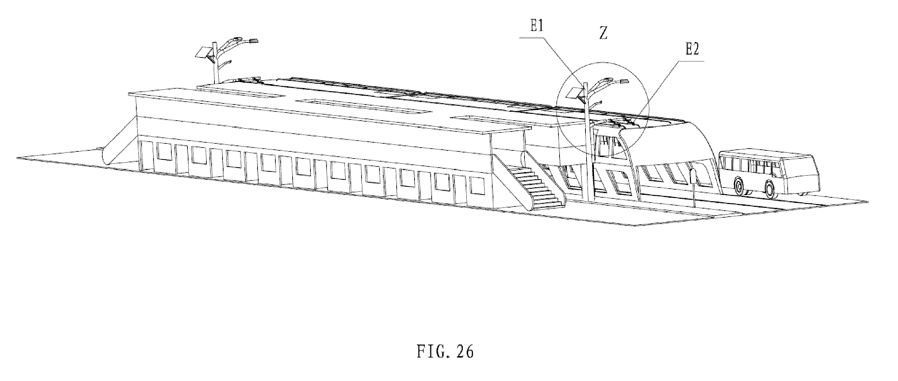

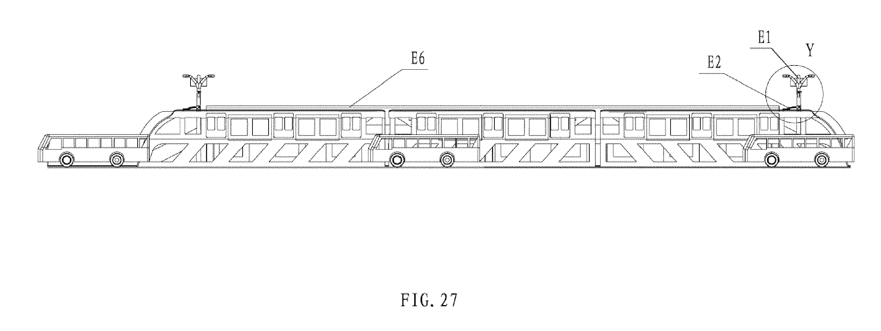

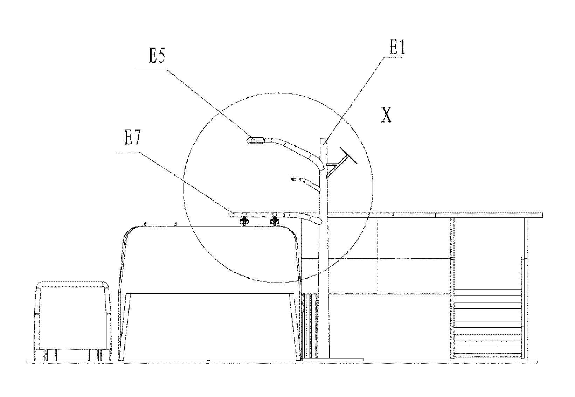

As shown in Fig. 21 through Fig. 28, a magnetic wireless relay type electrically conducting system includes a plurality of electrically conducting devices mounted at intervals along the road, and electrically conducting rods or bars on the top of the car. When the car is driving or parking on the road, the electrically conducting rods or bars come to in contact with the electrically conducting devices to form an electrical circuit to supply the car with power or charge the battery of the car. This invention is particularly suitable to the wide elevated-track electric car with longer body and able to run on a fixed track.

The electrically conducting devices respectively include at least one supporting column E1, at least one supporting arm E7 and at least one relay type electrically conducting roller E2. The relay type electrically conducting roller E2 includes a stretchable spring E21, a guiding plate E22 and an electrically conducting roller E23. The supporting column E1 is mounted beside the road. The supporting arm E7 is connected to the supporting column E1. The electrically conducting roller E23 is connected to the supporting arm E7 through the guiding plate E22 and the stretchable sprig E21. The electrically conducting roller E23 is connected to a power supply through a wire. The distance from the ground to the electrically conducting roller E23 is equal to the height of the electrically conducting rods E6 or bars on the top of the car. The electrically conducting roller E23 is attracted by magnetic force to be in contact with the electrically conducting rods E6 or bars, forming an electric circuit.

In this embodiment, the supporting arm E7 has two sets of electrically conducting rollers E23 apart from each other and connected to the power supply through a wire. The electrically conducting roller E23 is mounted at one terminal of the guiding plate E22 through a rotating shaft. The guiding plate E22 is of semi-spherical structure. One end of the stretchable spring E21 is fixedly connected to the supporting arm E7, while the other end is connected to the guiding plate E22 so that the electrically conducting roller E23 is freely hung on the supporting arm E7 in a manner of movable attachment.

The electrically conducting roller E23 or the guiding plate E22 has a magnet. The electrically conducting roller E23 has a circular groove along its outer circumference so that the electrically conducting roller E23 is able to be attracted onto the electrically conducting rod E6 on the top of the car by the magnetic force when the wide elevated-track electric car runs under the relay type electrically conducting device E2. The circular groove of the electrically conducting roller E23 engages with the electrically conducting rod E6 and is thus driven to roll against the electrically conducting rod E6. The interval between the supporting columns mounted besides the road is smaller than the length of the wide elevated-track electric car. After the car starts running, the electrically conducting roller of the first supporting column E1 starts to roll from the front to the rear of the car. At the moment the electrically conducting roller of the first supporting column E1 reaches the rear of the car, the electrically conducting roller of the second supporting column E1 has come to be in contact with the electrically conducting rod at the front of the car, forming an electric circuit. In this way, the wide elevated-track electric car can be supplied with continuous, reliable and stable power. This invention is particularly suitable for the electric car which uses super-capacitor as major energy storage device.

In this embodiment, the supporting column E1 has a solar battery board E4, a lamp E5 for illuminating the road, and a monitor E3. The solar battery board E4 can collect solar energy in daytime and supplement the electric energy to the system. The monitor E3 can monitor the operation of the whole system and the public security as well. Thereby, the applicability and commercial value of the invention increase with lowered operation cost.

The above embodiments of the invention can be combined in any way as needed.

The descriptions illustrated the *supra* set forth simply the preferred embodiments of the present invention; however, the characteristics of the present invention are by no means restricted thereto. All changes, alternations, or modifications conveniently considered by those skilled in the art are deemed to be encompassed within the scope of the present invention delineated by the following claims.

## Claims

1. A lightweight transport vehicle, **characterized in that**
a carriage, a connecting floor and a walking part;
the connecting floor locates at a bottom of the carriage; the walking part connects both sides of a bottom of the connecting floor for supporting and conveying the connecting floor and the carriage;
the distance between the connecting floor and the ground is at least larger than the height of the car; the width of the walking part between both sides of the bottom of the connecting floor is at least larger than a width of a car; and the distance between the walking part and a side of the car is enough for the car to travel through;
the carriage comprises at least one head and at least one body; the body comprises a left half head part and a right half head part which together complete the head; the connecting floor is divided into pieces respectively corresponding to the head and the body; and
there are connecting mechanisms responsible for connecting between the head and the body of each carriage and between the bodies.

2. The lightweight transport vehicle of claim 1, **characterized in that**
the amount of the head is two, respectively at a front and a rear of the body; the walking part comprises a head walking part and a body walking part, respectively corresponding to the bottom of the connecting floor of the head and to the bottom of the connecting floor of the body, and between the walking part and the body; there is supporting connection between the walking part and the head; and each connecting floor comprises a left half floor part and a right half floor part which together complete the connecting floor.

3. The lightweight transport vehicle of claim 1 or 2, **characterized in that**
a top of the body has exits for passengers to get on and off; stairs are formed between the exits and the connecting floor; and the exits respectively have a lid thereon;
a getting-on/off means, comprising an air bridge above the roads; the air bridge is away from the ground at a height reaching the exits of the car; and the air bridge has entrances corresponding to the exits, and further has stairs or escaladers reaching to the ground so that the passengers can enter a carriage of the car via the top thereof from the air bridge.

4. The lightweight transport vehicle of claim 3, **characterized in that**
each side of the carriage consists of side plates; the side plates of at least one side of the carriage has a plurality movable plates which are movably connected to the body so that the movable plates can be opened relative to the body and thereby becomes emergency exits.

5. The lightweight transport vehicle of claim 1 or 2, **characterized in that**
a guiding system for the car and a direction changing mechanism at the head are further comprised; the walking part comprises a guiding wheel located at a bottom thereof; the direction guiding system comprises a guiding shaft one end of which is connected to the direction changing mechanism, two guiding wheels connecting each other through a wheel shaft in the walking part, and a guiding groove on the road; and the guiding wheel, the guiding shaft and the wheel shaft locate at a bottom of the direction changing mechanism; and
the other end of the guiding shaft is connected to a middle of the wheel shaft; the guiding groove is embedded in the road with an opening being on the surface of the road; the guiding shaft extends into the guiding groove through the opening; and the guiding wheel is able to rotate inside the guiding groove.

6. The lightweight transport vehicle of claim 1 or 2, **characterized in that**
an emergency braking system is further included; the emergency braking system includes an emergency braking wheel, an emergency braking arm, a liquid pressure system and an emergency braking control system; the center of the emergency braking wheel has a wheel shaft; one end of the emergency braking arm is connected to the body through a rotating shaft; the other end of the emergency braking arm is connected to the wheel shaft; the liquid pressure system is a dynamic mechanism for the emergency braking system and includes a pressure liquid cylinder and a liquid pressure pump; one end of the liquid pressure cylinder is connected to the body, while the other end is connected between a middle of the emergency braking arm and a connecting point of the wheel shaft through the liquid pressure cylinder; and by means of the emergency braking arm driving the emergency braking wheel to move downward to a surface of a track, friction on the track generates accordingly to offer emergency braking effect.

7. The lightweight transport vehicle of claim 1 or 2, **characterized in that**
a magnetic wireless relay type electrically conducting system is further included; the electrically conducting system has a plurality of electrically conducting devices mounted at intervals, and electrically conducting rods or bars on the top of the car; and when the car is driving or parking on the road, the electrically conducting rods or bars come to in contact with the electrically conducting devices to form an electrical circuit;
the electrically conducting devices respectively include a supporting column, a supporting arm and an electrically conducting roller; the supporting column is mounted beside the road; the supporting arm is connected to the supporting column; and the electrically conducting roller is connected to the supporting arm through a movable connecting device;
the electrically conducting roller is connected to a power supply through a wire; and
the distance away from the ground to the electrically conducting roller is equal to the height of the electrically conducting rods or bars on the top of the car; and the electrically conducting roller is attracted by magnetic force to be in contact with the electrically conducting rods or bars, forming an electric circuit.

8. The lightweight transport vehicle of claim 7, **characterized in that**
the movable connecting device includes a stretchable spring; one end of the stretchable spring is fixedly connected to the supporting arm, while the other end is connected to the electrically conducting roller; and the electrically conducting roller is freely hung on the supporting arm via the stretchable spring in a manner of movable attachment.

9. A lightweight transport vehicle, **characterized in that**
a carriage, a connecting floor and a walking part;
the connecting floor locates at a bottom of the carriage; the walking part connects both sides of a bottom of the connecting floor for supporting and conveying the connecting floor and the carriage;
a car pathway for a car to drive is formed along the lengthwise direction of the carriage under the carriage; and
the carriage is of an assembled structure having a plurality of units to complete the whole head or body by using a connecting mechanism between the units.

10. The lightweight transport vehicle of claim 9, **characterized in that**
The carriage comprises at least one head and at least one body which can be assembled to complete the whole head; the body includes a left half body part and a right half body part which can be assembled to complete the whole body; the head comprises a left half head part and a right half head part which can be assembled together; the left half body part, the right half body part, the left half head part and the right half head part can be assembled together; and there are supporting connection between the walking part and the body, and between the walking part and the head; or
the carriage comprises at least one head and at least one body; the body comprises at least two body sections as a front body part and a rear body part; the body sections and the head can be assembled together to complete the whole head; there are supporting connection between the walking part and the body, and between the walking part and the head.
